# EUROPEAN PATENT APPLICATION

(11) **EP 1 601 158 A2**
(43) Date of publication of application: **30.11.2005**
(21) Application number: 05102307.5
(22) Date of filing: 22.03.2005
(51) Int. Cl.: H04L 29/06

(54) **Method for the discovery of devices connected to an IP network and device to carry out said method**

(30) Priority: 30.03.2004 FR 0403337
(71) Applicant: Thomson Licensing, 92100 Boulogne Billancourt (FR)
(72) Inventor: Prigent, Nicolas, 92648 Boulogne Cedex (FR); Heen, Olivier, 92648 Boulogne Cedex (FR); Maetz, Yves, 92648 Boulogne Cedex (FR); Salmon-Legagneur, Charles, 92648 Boulogne Cedex (FR); Tang-Talpin, Yan-Mei, 92648 Boulogne Cedex (FR)
(74) Representative: Le Dantec, Claude

(57) **Abstract**

The present invention relates to IP networks and, more particularly, local area networks, for example home networks. It concerns the manner in which devices connected to such networks obtain and update knowledge of the other compatible devices connected to the network. This method is based on the regular transmission of signalling messages by all the compatible devices. Thus, by monitoring the network, a device is able to detect the other devices in the network.

## Description

The present invention relates to IP ("Internet Protocol") networks, described in RFC791, and in particular local area networks, for example home networks. It concerns the manner in which devices connected to such networks obtain and update knowledge of the other compatible devices connected to the network.

In home networks using IEEE 1394 technology, a high-performance bus described in the document entitled "IEEE Std 1394-1995 High Performance Bus, 1996-08-30", the connection or disconnection of a device in the network causes the reset of the bus, thereby initiating a connected device discovery phase.

In an IP network, the connection or disconnection of a device does not instigate any specific activity on the network which is likely to be detected by the other devices. Certain applications or certain protocols need a device connected to the network to be able to identify the other devices participating in this application or implementing the same protocol. We can cite, for example, the SmartRight digital content copy protection protocol, which is described, for example, in the European patent application published under number EP 1 253 762 A1. Devices implementing this protocol must detect the arrival of a new device compatible with this protocol on the network in such a way as to be able to initiate a key management phase to ensure network coherence.

Service discovery protocols exist on the IP network, for example the "Simple Services Discovery Protocol", described in the document entitled "draft-cai-ssdp-v1-03.txt", which is available from the IETF ("Engineering Internet Task Force"). However, this protocol, apart from the fact that it is geared towards the discovery of services, and in particular HTTP services, rather than devices, does not guarantee fast and reliable detection of the arrival of a device on the network. In fact, this detection is based on the dispatch of an announcement message by the device arriving on the network, this message being sent using the "User Datagram Protocol" (UDP), which is described in RFC768. This announcement message may never be received by the network devices, since the UDP protocol is not resilient and offers no guarantee against possible message loss.

Other protocols, such as the "Dynamic Host Configuration Protocol", enable a device arriving on the network to obtain information on the network. However, apart from the fact that, once connected, these protocols, do not offer the means to be alerted of the subsequent connection of new devices, these protocols perform a conventional IP client-server function which is not relevant here. Indeed, for our application it is desirable for no device to play a specific role which excludes the use of a server which centralizes network management.

This therefore creates the problem of finding an IP-based method which is independent of the underlying network layers and which enables detection of the arrival on the network and the departure from the network of devices implementing the same method. The problem also arises for the device to detect its own arrival on the network. This method cannot be based on the presence of a server performing a network management role in such a way as to be capable of functioning between all the devices carrying out the method without preliminary simple and immediate configuration.

The invention therefore enables devices carrying out the method to quickly discover their own connection to a network of compatible devices and, once connected, the arrival of a new compatible device on the network. The invention also enables the list of compatible connected devices to be maintained, and the departure of compatible devices from the network to be discovered.

The invention relates to a method for discovery, by a device which is intended to be connected to at least one IP network, of devices implementing said method and connected to said network. This method comprises a stage in which the device repeatedly and automatically sends signalling messages on the IP network which are intended to announce the presence of said device. This method also comprises a stage in which the device discovers the other devices in the network by monitoring said network in such a way as to receive the signalling messages transmitted by the other devices which carry out said method and which are connected to said network.

According to a particular embodiment of the invention, the device maintains a list of connected devices from which it receives signalling messages.

According to a particular embodiment of the invention, the device stores time stamp information in the list for each referenced device from the last signalling message received from this device.

According to a particular embodiment of the invention, the device periodically removes from the list the devices from which it has not received any signalling messages during a given period of time.

According to a particular embodiment of the invention, the device signals the arrival and departure of a device when it adds or removes a list entry.

The invention also relates to a device which is intended to be connected to an IP network, having means for repeated transmission of signalling messages on the network, means for receiving signalling messages transmitted by the other devices on the network, characterized in that it has means for storing a list of the devices from which it has received at least one signalling message.

According to a particular embodiment of the invention, the device furthermore has means for storing the time of the last signalling message received from a device in said list.

According to a particular embodiment of the invention, the device furthermore has means for periodically scanning said list in order to remove entries corresponding to a device from which no signalling message has been received during a given period of time.

According to a particular embodiment of the invention, the device furthermore has means for signalling the arrival of a new device and the departure of a device from the network, linked to the addition and removal of corresponding entries in the list.

The invention will be more readily understood and other features and advantages will become evident from reading the description which follows, referring also to the attached drawings, in which:
Figure 1 shows a diagram of the inputs and outputs of the logic module which carries out the method in one embodiment of the invention.
Figure 2 shows the typical architecture of a device carrying out the method.

In order to resolve the problem of detecting the addition of new devices to the network, a module is implemented above the IP layer of the devices. This module repeatedly sends signalling messages on the network. These messages indicate the presence of the device on the network to the other devices which are also connected to this network and which are compatible with this method. The module must therefore also monitor all the signalling messages which are likely to be sent by its peers. The module monitoring these messages therefore periodically receives a message from its peers, indicating their presence on the network. This makes it easy for the module to maintain a list of the devices connected to the network. In fact, on receiving a signalling message, it will suffice to check whether the device sending the message is already in the list and, if not, to add it to the list.

The problem of detecting the departure of devices from the network will be tackled in the same manner. The underlying principle is that the modules within the devices will transmit signalling messages at given intervals. For example, the signalling messages will be transmitted at a first interval T1 which may, for example, be 4 seconds. It will then suffice to enter in the list of connected devices the time when the last signalling message which they transmitted was received, or any other time stamp information. It will then be possible to implement a periodic scan of this list, whereby this second interval T2 may be T1/2, or, for example, 2 seconds, and to consider that all the devices from which no signalling message has been received during a given period of time T3, for example 2.5 * T, or 10 seconds, have left the network, and remove them from the list.

Several alternatives are possible for sending these messages. A first method involves broadcasting these messages on the network. In this method, the messages transmitted on the network are delivered to all the devices present on the network, regardless of whether or not they are compatible with the method described. Another method involves defining a "multicast" address and a port which is known to all the devices. This may be an address and a well-known port defined by the IANA ("Internet Assigned Number Authority"), or a parameter common to all the devices in the network. The first solution is preferred as it limits the risks of error. Once this address and this port have been defined, all messages will be transmitted on this multicast address, whereby each device carrying out the method must monitor the traffic on this multicast address. In this way, only the devices concerned will receive messages relating to this protocol.

The choice of T1, T2 and T3 will depend on the responsiveness of the detection of the arrival and departure of devices in the network. On the other hand, the network congestion caused by these messages and the reliability of detection must be taken into account. In fact, the use of multicasting or broadcasting entails the use of the UDP ("User Datagram Protocol"). This protocol offers no guarantee against the loss of packets, and therefore certain signalling messages are likely to be lost. Therefore, the shorter T1 is, the faster the detection of the arrival and departure of devices in the network will be, but the more numerous the messages transmitted on the network by this method will be. The shorter T2 is, the faster the detection of the departure of devices from the network will be, to the detriment of the computing time required to scan the list. The shorter T3 is, the faster the detection of the departure of devices from the network will be, but the more the risk will increase of detecting a false departure following the loss of one or more signalling messages from a device. The values given are therefore indicative and work well in the case of an IP network above a reliable, high-bandwidth physical Ethernet link. A choice of a slightly longer value, requiring the non-receipt of signalling messages from a device during a period of time corresponding to more than two and a half times the transmission period T1, is likely to be more suitable in the case of a less reliable wireless network.

As far as the message format is concerned, since the source and destination addresses are contained in the message IP header, no particular content is required in the message body. The fact that the message is sent on the address and the port reserved for this method suffices to identify these packets as being dedicated to the method. The message content can obviously be enhanced without exceeding the scope of the invention, for example by means of an explicit coding of the method used.

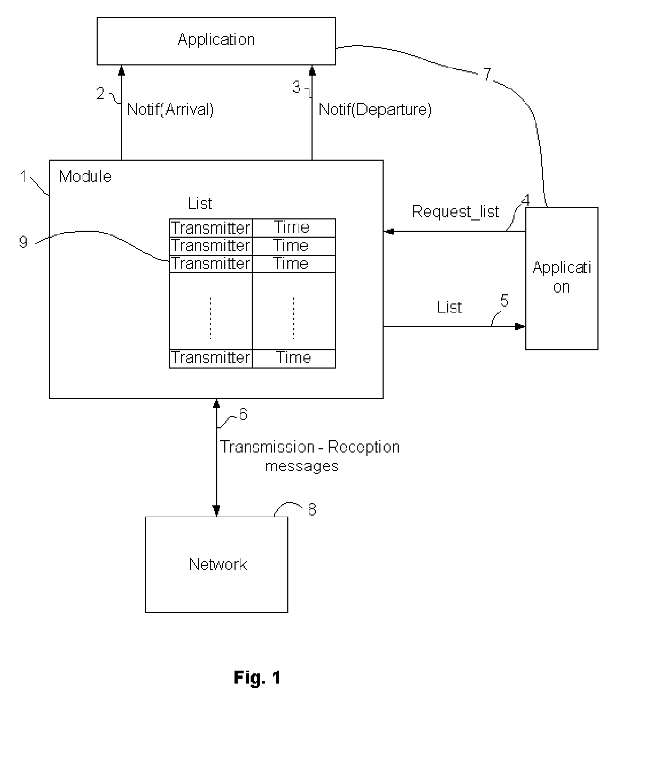

Figure 1 is a diagram showing the inputs/outputs of a logic module, referenced as 1. The module transmits its signalling messages and receives those originating from other devices via the two-way link, referenced as 6, with the network, referenced as 8. The signalling messages received allow it to update a list, referenced as 9, of the senders of these messages and the time of reception or transmission of the last received message. In the embodiment described, this module signals the arrival of a new device to the application, referenced as 7, via an event transmission, referenced as 2. In this context, the term "application" refers to any software involved in this type of event and running on the device. This notification will take place on receipt of a signalling message transmitted by a device not included in the list of connected devices. The device will then be added to the list. A regular scan of the list is carried out in order to remove the transmitting devices from which no signalling message has been received for a period of time greater than a given period of time. In this case, a network departure event is signalled, referenced as 3, to the application. At any time, the application may send a request, referenced as 4, to the module in order to obtain the list of connected devices. This list is then sent to it, referenced as 5.

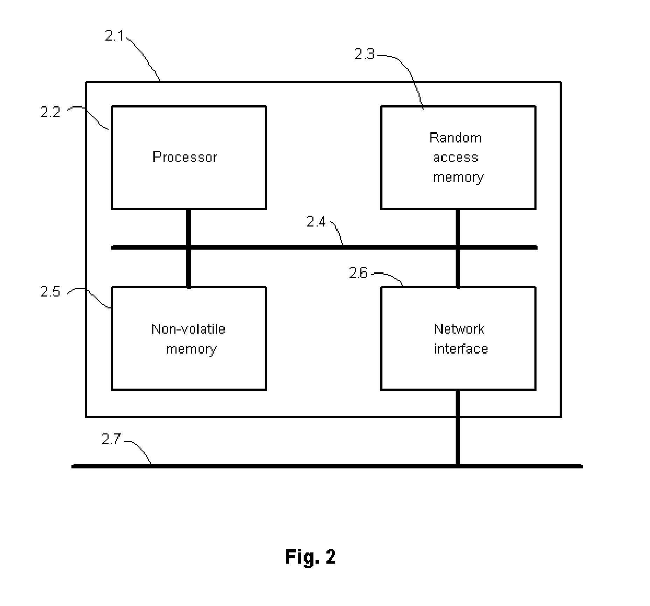

Figure 2 shows an example of the general architecture of a device, referenced as 2.1, which is intended to carry out the method. Such a device comprises a network interface, referenced as 2.6, which is intended to connect the device to the network, referenced as 2.7. It also comprises a non-volatile memory, referenced as 2.5, which is intended to store the programs required in order to carry out the method, including the stack managing the IP communication, the network interface management layer and the programs managing the exchanges of messages according to the method described. These programs will be loaded into the random access memory, referenced as 2.3, to be run by the central processor, referenced as 2.2. All these elements will be interconnected by a communications bus, referenced as 2.4. It will be evident to the person skilled in the art that this architecture may vary in the configuration of these means, and is no more than an example of the architecture of a device which is capable of carrying out the method.

It goes without saying that, although it is described in the context of messages transmitted in multicast mode using UDP, the invention may be varied by the person skilled in the art in terms of the transmission modes and the protocol used, for example ICMP ("Internet Control Message Protocol"), without exceeding the scope of the invention.

## Claims

1. Method for the discovery, by a device intended to be connected to at least one IP network, of devices carrying out said method and connected to said network, **characterized in that** it comprises at least the following steps:
- the device repeatedly and automatically sends signalling messages on the IP network which are intended to announce the presence of said device.
- the device discovers the other devices in the network by monitoring said network in such a way as to receive the signalling messages transmitted by the other devices which carry out said method and which are connected to said network.

2. Method according to claim 1, whereby the device maintains a list of connected devices from which it receives signalling messages.

3. Method according to claim 2, whereby the device stores time stamp information in the list for each referenced device from the last signalling message received from this device.

4. Method according to claim 3, whereby the device periodically removes from the list the devices from which it has not received any signalling messages during a given period of time.

5. Method according to claim 4, whereby the device signals the arrival and departure of a device when it adds or removes a list entry.

6. Device which is intended to be connected to an IP network, having means for repeated transmission of signalling messages on the network, means for receiving signalling messages transmitted by the other devices on the network, **characterized in that** it has means for storing a list of the devices from which it has received at least one signalling message.

7. Device according to claim 6, furthermore having means for storing the time of the last signalling message received from a device in said list.

8. Device according to claim 7, furthermore having means for periodically scanning said list in order to remove entries corresponding to a device from which no signalling message has been received during a given period of time.

9. Device according to claim 8, furthermore having means for signalling the arrival of a new device and the departure of a device from the network, linked to the addition and removal of corresponding entries in the list.
